# EUROPEAN PATENT SPECIFICATION

(11) **EP 0 997 047 B1**
(45) Date of publication and mention of the grant of the patent: **17.08.2005**
(21) Application number: 98933788.6
(22) Date of filing: 13.07.1998
(51) Int. Cl.: H04Q 7/22, H04Q 7/32

(54) **ENCRYPTED BROADCAST MESSAGES IN A CELLULAR COMMUNICATIONS SYSTEM**
VERSCHLÜSSELTE RUNDSCHREIBNACHRICHTEN IN EINEM ZELLULAREN KOMMUNIKATIONSSYSTEM
MESSAGES CRYPTES POUR DIFFUSION DANS UN SYSTEME DE COMMUNICATIONS CELLULAIRE

(30) Priority: 17.07.1997 GB 9715097
(43) Date of publication of application: 03.05.2000
(73) Proprietor: ORANGE PERSONAL COMMUNICATIONS SERVICES LIMITED, Almondsbury, Bristol BS12 4QJ (GB)
(72) Inventor: FORD, Peter, Bristol BS17 5RB (GB)
(74) Representative: Spaargaren, Jerome
(86) International application number: PCT/GB1998/002064
(87) International publication number: WO 1999/004583

(56) References cited:
- EP-A- 0 689 368
- WO-A-96/41493
- US-A- 5 371 493
- FARRUGIA A J ET AL: "SMART CARD TECHNOLOGY APPLIED TO THE FUTURE EUROPEAN CELLULAR TELEPHONE ON THE DIGITAL D-NETWORK" SELECTED PAPERS FROM THE SECOND INTERNATIONAL SMART CARD 2000 CONFERENCE, 4-6 OCTOBER 1989, AMSTERDAM, NL, 1 January 1989, pages 95-107, XP000472724

## Description

This invention relates to a method of an apparatus for distributing and receiving information in a cellular telecommunications network, for example a GSM (Global System for Mobile communications) digital cellular radio network.

The GSM standard is defined in a set of technical specifications issued by the European Telecommunications Standards Institute (ETSI), and there are currently a number of mobile telecommunications networks operating in accordance with the GSM standard, and variants thereof, such as the DCS1800 standard.

One service provided is a service referred to as a cell broadcast (CB), or short message - cell broadcast (SMS CB), service. In this service, information in the form of pages of text is transmitted on a common channel (the cell broadcast channel, CBCH) of cells in the network. The transmission of pages is repeated at regular intervals, and users can store the information for retrieval and display by means of selective keystrokes on a mobile station, or may turn off the cell broadcast function so as not to store the information. The information is intended to include locality-specific information, such as lists of local facilities (hospitals, pharmacies, taxis, etc), local weather reports, local date/time indications, etc.

International patent application PCT/SE96/00716, publication number WO 96/41493 describes a digital control channel (DCCH) arrangement for use with TDMA communication systems wherein DCCH slots are organised into "superframes", each of which has one or more logical channels (e.g. broadcast control channel (BCCH), paging channel (PCH), access response channel (ARCH) etc.). In particular, WO 96/41493 describes broadcasting SMS messages over one or more channels of a short message service broadcast channel (S-BCCH), each SMS message having attributes that can be accessed by a receiving mobile station; the message attributes are associated on a subchannel basis rather than being associated with individual messages. Whilst the majority of the patent specification describes the technical details of distributing the SMS data and attributes over DCCH, it also describes encrypting SMS messages in accordance with class of message service. Such encrypted messages are then decrypted upon receipt, by the mobile station. A problem with this arrangement is that this requires the mobile station to be customised.

Despite knowledge of arrangements such as that described in WO 96/41493, which are provided for in current GSM-type networks and the mobile stations used in them, the cell broadcast functionality has not been widely implemented in practice, in probability at least partly due to the costs associated with assembling and disseminating information via the service.

In accordance with an aspect of the present invention there is provided a method of distributing information to users in a cellular telecommunications network comprising a plurality of base stations transceiving in a plurality of cells of said network, said method comprising:
providing a plurality of mobile stations, wherein said mobile stations are each provided with a removable module which may be used in association with any of a plurality of said mobile stations, each of said mobile stations having an associated information access status for the receipt of messages broadcast on a common channel of at least one cell of said network;
enabling first mobile stations having a first information access status to decrypt and present broadcast messages to a user in unencrypted form when being served by said cell, by providing each of said first mobile stations with a decryption function arranged to use a decryption key;
preventing second mobile stations having a second information access status from presenting said broadcast messages in unencrypted form to a user when being served in said cell;
broadcasting a signal on a common channel of at least one cell of said network, said signal containing a broadcast message in encrypted form, for general reception in said at least one cell and for limited access by users of said first mobile stations; and
each said first mobile stations receiving said encrypted broadcast message, decrypting the message using said decryption key and presenting the message in unencrypted form to its respective user,
characterised by:
providing each said removable module of each of said first mobile stations with said decryption function arranged to use said decryption key;
transmitting a transfer protocol identifier indicating that the encrypted broadcast message is of a type for data download to the removable module from the first mobile station;
arranging for each said first mobile station to pass said encrypted broadcast message to its corresponding removable module in response to receipt of said transfer protocol identifier; and
arranging for each said removable module of each of said first mobile stations to decrypt said encrypted broadcast message using said decryption key.

In this aspect of the invention, not only does the removable module store the decryption key for the message, but it also performs the decryption. An advantage of this aspect of the invention is that the invention can be implemented by functionality provided only in the mobile network and in the removable modules themselves, without requiring any alteration to the mobile stations themselves.

Another advantage of this aspect of the invention is that a user not authorised to access the information can only view the message in encrypted form and unintelligibly, whereas a user having access rights to the information is able to view the message in decrypted and intelligible form. Services may be provided on a subscription basis. Some subscribers in the network may wish to have access to the information broadcast generally in the cell in addition to other services provided in the telecommunications network, such as voice call services, and will take out a subscription allowing access to the cellular information broadcasting service. Other users may not wish to receive the benefit of the information broadcast in the cell, and will take out a subscription, perhaps at lower cost, preventing them from accessing the information.

Preferably, the signal comprises a plurality of limited access messages each having a corresponding access right, the method comprising providing mobile stations with access rights, and enabling only mobile stations having an access right corresponding to a limited access message to present the limited access message to a user when being served in the cell. This allows the selection on a per user basis of the type of information a user is able to access, thus allowing a subscription to be individually tailored to a subscribers' needs.

The signal may also contain a general access message, the method comprising enabling both the first and second mobile stations to present the general access message to a user when being served in the cell. This allows both limited access messages and general access messages to be disseminated by broadcasts in cells of a cellular telecommunications system, allowing some information to be presented to any user irrespective of the subscription type held.

Preferably, alternative limited access messages are broadcast in cells located in different areas of the cellular telecommunications network, thereby tailoring the information within the messages to different localities and increasing the utility of the service.

In accordance with a further aspect of the invention there is provided a mobile station for receiving information in a cellular telecommunications system, said mobile station comprising:
means for receiving an encrypted message broadcast on a common channel of a cell of said cellular telecommunications system;
means for displaying said message, when decrypted, to a user; and
a removable module comprising a memory for storing a decryption key,
characterised in that:
the mobile station comprises means responsive to receipt of a transfer protocol identifier indicating that the broadcast message is of a type for data download to a removable module from the mobile station, so as to pass said encrypted broadcast message to the removable module; and
the removable module comprises means arranged to receive and decrypt said encrypted broadcast message using said decryption key.

This aspect provides apparatus whereby a user may receive limited access messages on a common channel of a cell in the telecommunications system, and view the information in decrypted form, if the removable module associated with the user is provided with the decryption key. A decryption key may be distributed only to cellular users having a predetermined subscription type.

An embodiment of the present invention will now be described, by way of example only, with reference to the accompanying drawings, wherein:
Figure 1 is a block diagram schematically illustrating a cellular telecommunications system;
Figure 2 is a block diagram schematically illustrating a cellular telecommunicationsmobile station;
Figure 3 illustrates a list stored in a cell broadcast centre in accordance with the present invention;
Figure 4 is a flow diagram illustrating functions carried out by the cell broadcast centre in accordance with the present invention;
Figures 5 and 6 illustrate data blocks broadcast in a cell in accordance with the present invention;
Figure 7 is a flow diagram illustrating functions carried out by a network management centre in accordance with the present invention;
Figure 8 illustrates a short message transmitted to a mobile station in accordance with the present invention;
Figure 9 illustrates functions carried out by a mobile station when displaying a cell broadcast message in accordance with the present invention;
Figure 10 shows an example of a display of a decrypted message in accordance with the present invention;
Figure 11 illustrates an example of a display of an encrypted message in accordance with the present invention; and
Figures 12 and 13 are flow diagrams illustrating encryption key updating procedures carried out in accordance with the present invention.

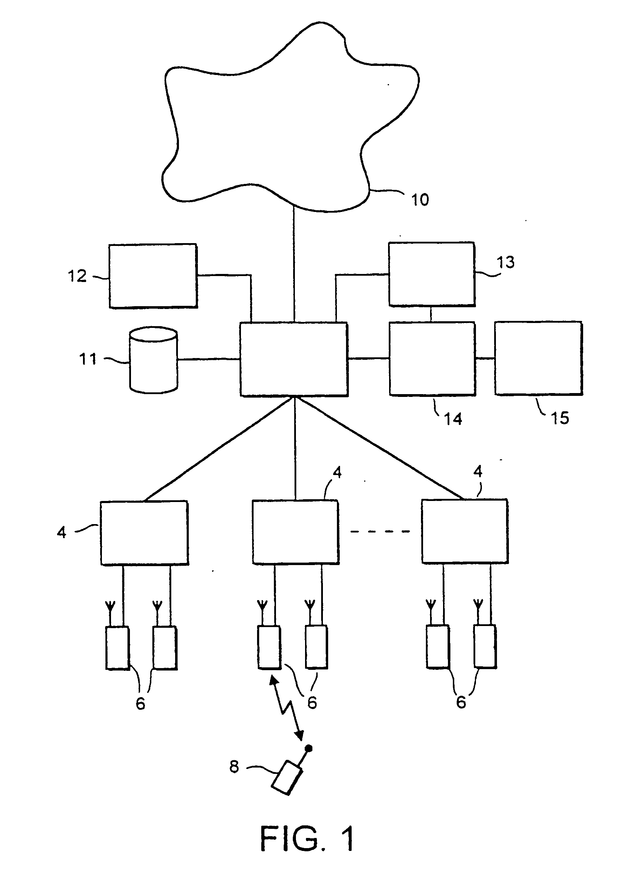

A GSM network, referred to as a public land mobile network (PLMN), is schematically illustrated in Figure 1. This is in itself known and will not be described in detail. A mobile switching centre (MSC) 2 is connected via communication links to a number of base station controller (BSCs) 4. The BSCs 4 are dispersed geographically across areas served by the mobile switching centre 2. Each BSC 4 controls one or more base transceiver stations (BTSs) 6 located remote from, and connected by further communication links to, the BSC. Each BTS 6 transmits radio signals to, and receives radio signals from, mobile stations 8 which are in an area served by that BTS. That area is referred to as a "cell". A GSM network is provided with a large number of such cells, which are ideally contiguous to provide continuous coverage over the whole network territory. The radio signals are separated into a number of distinct communications channels. These include common channels and traffic channels. The traffic channels are used for point to point communications (voice calls, data calls, etc) with specific mobile stations. The common channels are received by all mobile stations being served by the cell and contain signalling and/or message data.

The mobile switching centre 2 is also connected via communications links to other mobile switching centres in the remainder of the mobile communications network 10, and to other networks such as a public service telephone network (PSTN), which is not illustrated. The mobile switching centre 2 is provided with a home location register (HLR) 11 which is a database storing subscriber authentication data including the international mobile subscriber identities (IMSIs) which are unique to each mobile station 8. An IMSI consists of a mobile country code (3 decimal digits), a mobile network code (2 decimal digits) and a mobile subscriber code (up to 10 decimal digits) identifying a subscriber within a particular network. The IMSI is also stored in the mobile station in a subscriber identity module (SIM) (to be described below) along with other subscriber-specificinformation.

The mobile switching centre is also provided with a visitor location register (VLR), not shown, which is a database temporarily storing subscriber authentication data for mobile stations active in its area.

In addition, the MSC is connected to a cell broadcast centre (CBC) 12 for originating cell broadcast (CB) messages in the network, a short message centre (SMC) 13 for handling the transfer of point to point short messages within the network, a network management centre (NMC) 14 for performing management functions in the network, and a customer services system (CSS) 15 for performing customer service functions, including the updating of customer subscription data for example by manual input at workstations in the system.

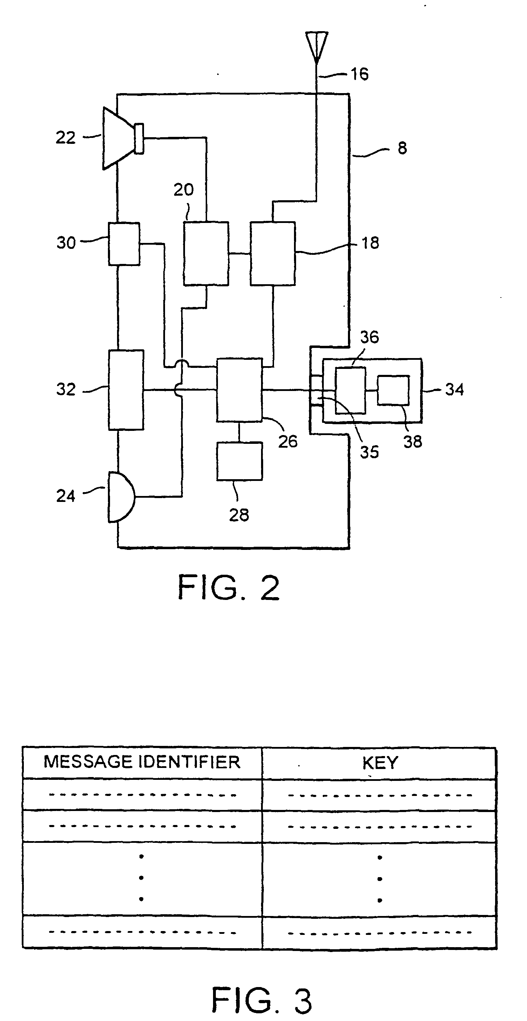

Referring to Figure 2, a mobile station 8, more specifically a cellular mobile telephone, comprises a transmit/receive aerial 16, a radio frequency transceiver 18, a speech coder/decoder 20 connected to a loudspeaker 22 and a microphone 24, a processor circuit 26 and its associated memory 28, an LCD display 30 and a manual input port (keypad) 32. The mobile station 8 is connected to a removable SIM 34 via electrical contacts 35.

The SIM 34 connected to the mobile station has a SIM processor 36, for example a Hitachi H8 microprocessor, and SIM memory 38, which includes for example 16 kilobytes of mask-programmed ROM 38a containing the SIM operating system, 8 kilobytes of read/write EEPROM 38b for the non-volative storage of data items and 256 bytes of RAM for use by the SIM processor 36 during operations.

As described above, the SIM 34 is used for the storage and retrieval of data items by the processor 26 of the mobile station 8. The command set, data file structure and data coding format for data communicated via the interface between the mobile station processor 26 and the SIM processor 36 are all specified, in GSM technical specification 11.11.

Referring back to the network elements illustrated in Figure 1, the CBC 12 holds a set of cell broadcast messages to be broadcast within the network, and transmits them to the BSCs 4 in accordance with location areas which are predefined for each message type. Each cell broadcast message is provided with a unique message identifier (a 16 bit integer), which identifies the type of the message. The BSCs 4 then proceed to broadcast the message, via the respective BTSs 6, on their CBCHs. The CBCH protocols and the timing of the broadcasts are specified in GSM technical specification 05.02.

The CBC 12 holds a list as illustrated in Figure 3, specifying encryption keys for each type of message which is to be broadcast in encrypted form. For each such message, the key is listed against the message identifier. Each key is a 16 bit integer and, since the message identifiers are also 16 bit integers, no two keys in the list need to be the same. The keys are used to encrypt a message using an XOR function as will be described below.

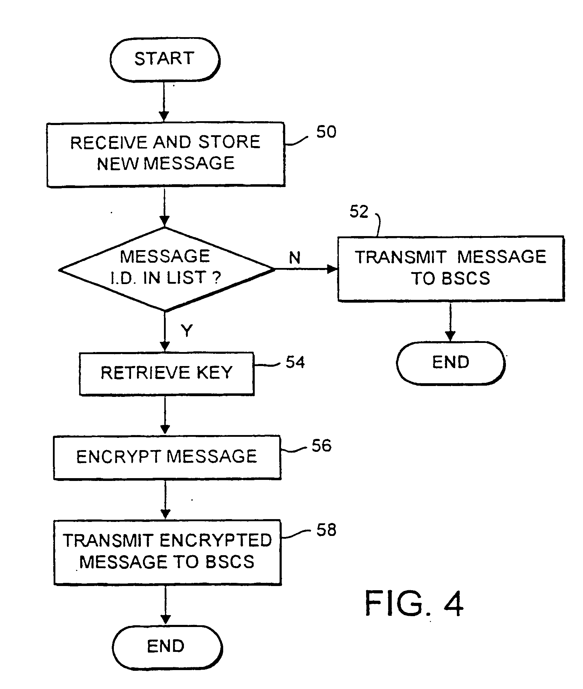

Figure 4 illustrates a procedure carried out by the CBC 12 when receiving a new message for transmission as a cell broadcast message. A new message may be provided in the CBC 12 for example by manual input on a workstation associated with the CBC, or may be provided on-line from a remote source.

When the CBC 12 receives the new message, which may be an update of a previous message stored for the same message identifier, the message is stored by the CBC 12 and any previous message stored for the same message identifier is overwritten, step 50.

Next, the CB C 12 checks, using the message identifier provided with the new message, whether the message identifier appears in the key list illustrated in Figure 3. If no key is held for that particular message identifier, the message will be made generally available by cell broadcast to all mobile stations served in the cells in which the message is to be distributed. The message is transmitted for broadcast to the relevant BSCs 4 in unencrypted form, step 52.

The cell broadcast message may consist of one or more (up to a maximum of 15) pages. Each cell broadcast page consists of 88 octets of information, consisting of a 6 octet header and 82 octets for message text. A 7 bit default character set is used, equating to up to 93 characters per page.

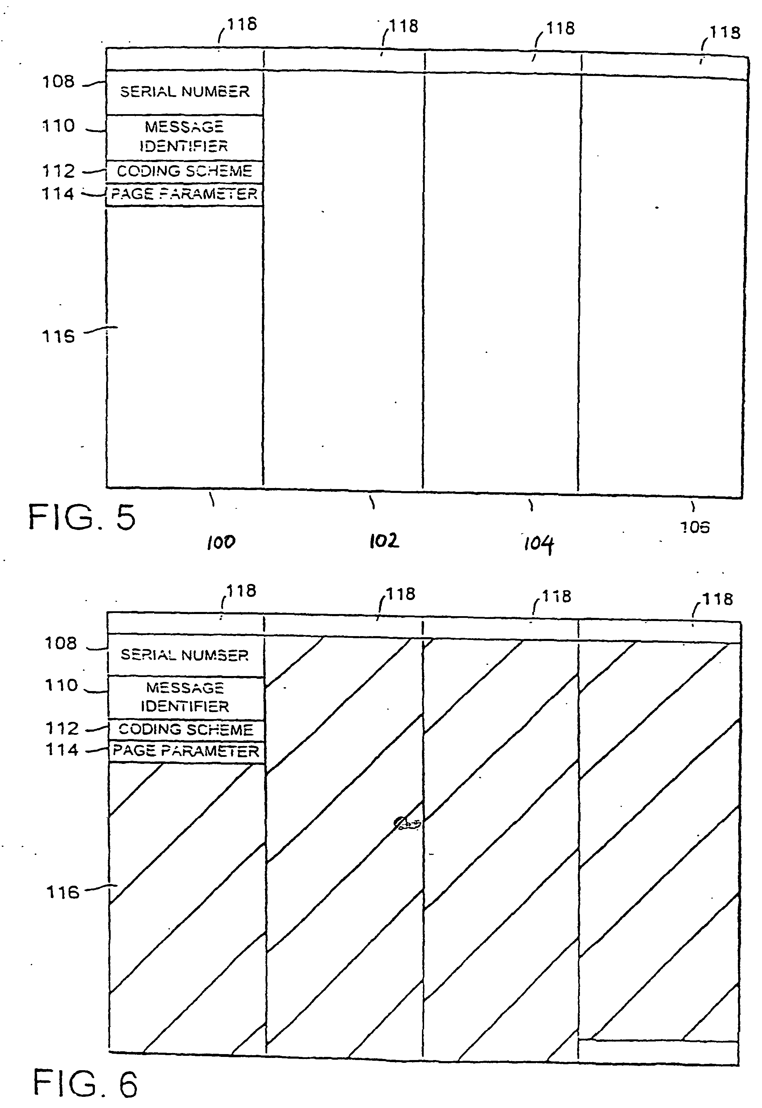

Figure 5 illustrates the manner in which each page of a cell broadcast message is transmitted in a cell by the BSC/BTS on the CBCH. The broadcast is divided into four blocks per page. The first block 100 contains 2 octets of data 108 indicating the serial number for the page, 2 octets of data 110 indicating the message identifier for the page, 1 octet of data 112 identifying the coding scheme used for the message text, and 1 octet of data 114 indicating the page parameter. The remaining 16 octets of data 116 contain the first part of the message text for the page.

The remaining 3 blocks 102, 104, 106 of the page broadcast consists entirely of message text, except each block is headed by a single octet of data 118 indicating the block type.

The serial number indicated in block portion 108 is a 16 bit integer which is used to identify a particular message. The serial number is updated when a message with a given message identifier is updated. The serial number consists of a 12 bit message code and a four bit update number, which are incremented according to message updates.

The message identifier in portion 110 is used to identify the type of message, as described above.

The coding scheme indicated in portion 112 is used to indicate the source language of the message, allowing a user to screen out any messages received in a language in which they are not conversant. The page parameter indicated in portion 114 is used to specify the current page number within a message and the total number of pages within the message.

The message text for each page consists of up to 93 characters. If the message text within a page is shorter than 93 characters in length, the carriage return (CR) character is used to provide packing, thus bringing the total number of characters to 93. To maintain an integral number of octets, the remaining 5 bits are set to "0" as padding data at the end of the page.

The block structure illustrated in Figure 5 is that of a conventional cell broadcast message, and may be received and displayed by currently-available GSM-type mobile stations in receipt of the cell broadcast channel on which the message is broadcast.

Referring again to Figure 4, if on the other hand the CBC 12 detects the message identifier of the new message in the key list, the corresponding key is retrieved, step 54. The key is then used to encrypt the message, step 56, which is then transmitted to the appropriate BSCs 4, step 58. The encryption of step 56 is performed by applying an XOR function between the most significant 8 bits of the key and each odd-numbered message text octet in a page, and by applying the XOR function between the least significant 8 bits of the key and each even-numbered message text octet in a page, except the last such octet.

The pages broadcast by the BSCs 4 when receiving encrypted cell broadcast messages are of the form illustrated in Figure 6. Each page consists of the same components as the unencrypted page illustrated in Figure 5, namely 4 blocks each containing the various header portions. However, the majority of the message text is encrypted, as indicated by shading in Figure 6. The last octet of each page of message text, which contains the 5 bits of padding data, is left unencrypted, in order to protect the integrity of the padding data, which would be lost if encrypted. Each of the header portions is also transmitted in unencrypted form, to allow the proper reception and reading of the data in the header portions by all mobile stations 8.

As described above, the functionality for decrypting encrypted cell broadcast messages is contained within the SIM itself, the mobile station being arranged to support the SIM toolkit described in GSM Technical Specification 11.14.

In this embodiment each of the BSCs 4 broadcasting encrypted cell broadcast messages formats the encrypted message as a "data download via SMS-CB" message (coding scheme being specified in field 112), the encrypted message being included in the cell broadcast page along with an identifier for the key used to encrypt the message. The cell broadcast message includes a cell broadcast message identifier, which specifies the type of content contained in the cell broadcast page, and a transfer protocol identifier indicating that the message type is "SIM data download".

In order to properly receive and present an encrypted cell broadcast message in intelligible form to a user, a SIM 34 must be provisioned with the decryption key corresponding with the encryption key used to encrypt the message. With the XOR function as the encryption function, the encryption/decryption process is symmetric, and the same key used to encrypt the message is used to decrypt the message. This key is referred to herein as an encryption key when to be used to encrypt data, and a decryption key when to be used to decrypt data.

In order to provision the SIM 34 with the decryption key, a remote provisioning procedure is used, involving a remote SIM updating (RSU) message being transmitted to the mobile station 8, such as described in European patent application no. EP-A-0562890, the contents of which are incorporated herein by reference, or using the "data download via SMS Point-to-point" (SMS-PP data download) procedure as described in GSM Technical Specification 11.14, "Specification of the SIM Application Toolkit for the Subscriber Identity Module - Mobile Equipment (SIM-ME) Interface". The decryption keys are transmitted using a point-to-point data transfer protocol, such as the GSM-defined Short Message Service (SMS), over the radio interface to the mobile station 8 for storage in the SIM 34. The SIM 34 is provided with a cell broadcast decryption keys data field dedicated to the storage of cell broadcast decryption key data.

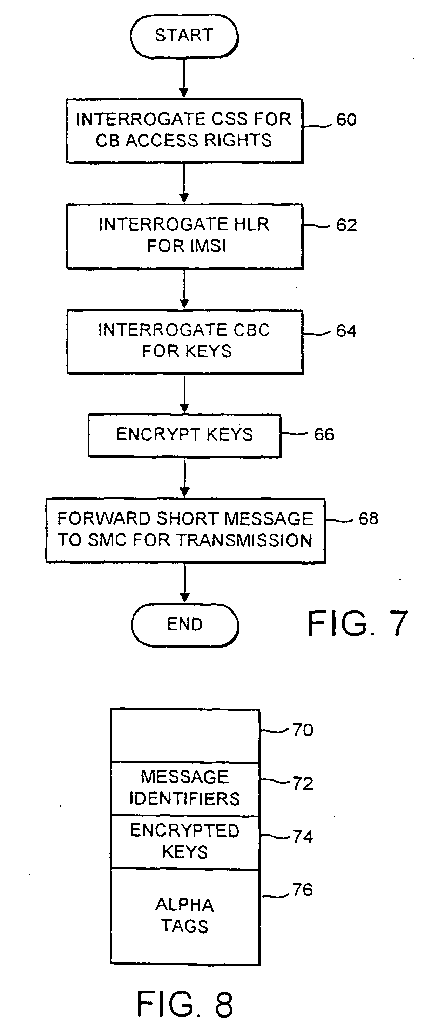

Figure 7 illustrates the procedures carried out by the NMC 14 in order to provision the mobile station 8 of a particular subscriber with decryption keys for each limited-access message type which the subscriber is entitled to have access to. The CSS 15 holds a record for the subscriber, indicating the access rights for that subscriber. These access rights are indicated by including in the subscriber record a list of the appropriate message identifiers for the message types which the subscriber should have access to. This access rights list may be updated and changed in the CSS 15.

In order to provision the mobile station 8 of the subscriber, the NMC 14 first interrogates the CSS 15 to determine the message access rights which are held for the subscriber, step 60. The NMC 14 also interrogates the HLR 11 in order to retrieve the IMSI of the subscriber, step 62. The NMC 14 also interrogates the CBC 12 to retrieve the decryption keys corresponding to each of the message identifiers indicated in the access rights details returned by the CSS 15, step 64. Next, each of the decryption keys returned by the CBC 12 is then itself encrypted by applying the XOR function between the 16 bits of the decryption key and 16 predetermined bits of the subscriber's IMSI record, step 66. This is to ensure that the decryption key may only be used by a mobile station 8 having access to the subscriber's IMSI (which is stored in the subscriber's SIM 34).

Once the decryption keys are encrypted, the NMC 14 forwards an RSU message to the SMC 13 for transmission, via the radio interface, as an SMS message to the mobile station 8 of the subscriber. The SMS message is transmitted conventionally, via a dedicated data channel, to the mobile station 8. The RSU message has the form illustrated in Figure 8, and includes a header portion 70, the message identifiers 72 for each message type to which the subscriber should have access to, the encrypted decryption keys 74, and alpha tags 76 (alphanumeric identifiers) for use by the subscriber to readily identify each of the message types. The header portion 70 includes a flag indicating that the SMS message is an RSU message, and a command indicating that the contents of the message are to be stored in the cell broadcast decryption keys data field.

On receipt of the SMS message, the mobile station forwards it for storage as an SMS message to the SIM 34. However, since the message has an RSU flag, the SIM processor 36 notes that the message is an RSU message, and updates the cell broadcast decryption keys data field in the SIM 34 with the message identifiers, the corresponding encrypted keys, and the corresponding alpha tags contained in the RSU message. The SIM 34 is now provided with the capability to decrypt all encrypted cell broadcast messages having message identifiers corresponding to those stored in the cell broadcast decryption keys data field.

In addition to the field dedicated to containing decryption keys, which may be populated by means of RSU procedures as described above, the SIM 34 contains a Cell Broadcast Message Identity for Data Download (CBMID) data field, as described in GSM Technical Specification 11.11, which holds data identifying the message content types the subscriber wishes the mobile station 8 to accept. In order to carry out decryption of incoming broadcast messages the SIM 34 includes an application programme, which may for example be stored in ROM or EEPROM on the SIM.

When the mobile station receives the cell broadcast download message, the mobile station 8 first queries the CBMID data field of the SIM to determine whether the message ID received for the cell broadcast message is currently selected by or for the subscriber. If a corresponding entry is found in the CBMID data field, the mobile station 8 transparently passes the cell broadcast page to the SIM 34 using a "cell broadcast download to SIM" command.

Reception of the cell broadcast download command by the SIM 34 causes the SIM to analyse the contents of at least a portion of the cell broadcast page, wherefrom it is determined whether the cell broadcast page contains an encrypted message. If so, the stored programme is invoked in order to decrypt the message, using the appropriate decryption key stored in the dedicated decryption keys field. Once the message is decrypted, the SIM passes the plain text message to the mobile station in a "display text" command, in response to which the mobile station 8 displays the plain text message.

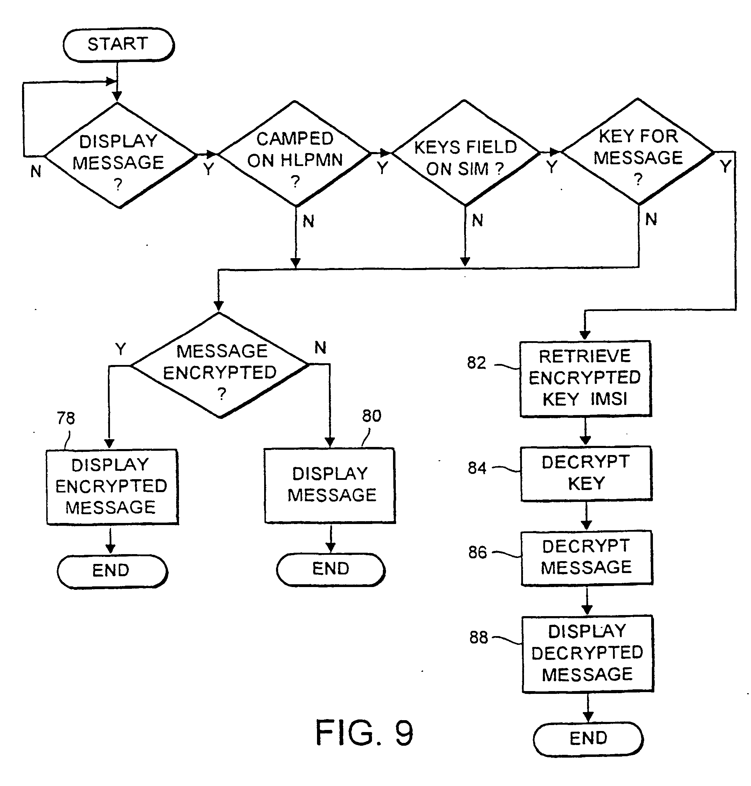

This process will now be described in more detail. When a cell broadcast message is newly picked up and stored, the user is prompted, for example by an audio tone or by a particular icon on the LED display 30 of the mobile station 8, to indicate that a cell broadcast message is ready to be displayed. The SIM 34, in operative association with the mobile station, then performs the procedures illustrated in Figure 9.

The SIM 34 first waits for input by the user requesting the message to be displayed. On receipt of such input, the SIM 34 in association with the mobile station, checks whether it is currently camped on its home network (HPLMN). If the mobile station is camped on a network which is not its home network, the mobile station proceeds directly to display the stored message. If the message is encrypted, the encrypted message is displayed in a form unintelligible to the user, step 78, as the message is of the limited access type and access to the information is denied to the subscribers of other networks. If the message however is unencrypted, i.e. of the general access type, the message is displayed in an intelligible form, step 80.

If the mobile station is camped on its home network, the SIM 34 checks whether it has the cell broadcast decryption keys data field provided in accordance with this invention. If not, the mobile station proceeds once again to either display an encrypted message, step 78, or an intelligible message, step 80, depending on the access type of message broadcast.

The SIM 34 then proceeds to check whether the message identifier of the stored message is present in the cell broadcast decryption keys field. If not, the message received may be of a general access type, and the message is displayed by the mobile station 8 in intelligible form, step 80. Otherwise, the message is of a limited access type to which the user has no access rights. The message is then displayed by the mobile station 8 in encrypted, i.e. unintelligible form, to prevent receipt of the information in the message by the user, step 78.

If the message identifier of the stored message is present in the cell broadcast decryption keys data field on the SIM 34, the SIM 34 proceeds to retrieve the encrypted decryption key corresponding to the message identifier of the stored message, along with the subscriber's IMSI, step 82.

With the encrypted decryption key and the IMSI, the SIM 34 performs the reverse of the encryption process carried out in the NMC 14, to obtain the original decryption key, step 84. This decryption is carried out by performing an XOR function between the 16 bits of the encrypted decryption key and the same set of 16 predetermined bits from the subscriber's IMSI used in the encryption process.

The SIM 34 then proceeds to decrypt the stored message at step 86, by performing the reverse of the encryption process carried out in the CBC 12 when generating the encrypted cell broadcast message. Namely, the SIM 34 performs the XOR function between the 8 most significant bits of the decryption key and each odd-numbered message text octet, and between the 8 least significant bits of the decryption key and each of the even-numbered message text octets, except for the last octet in each page (which was originally not encrypted). This returns the original cell broadcast message text, which is then displayed on the LCD display 30 of the mobile station, step 88, in a form intelligible to the user.

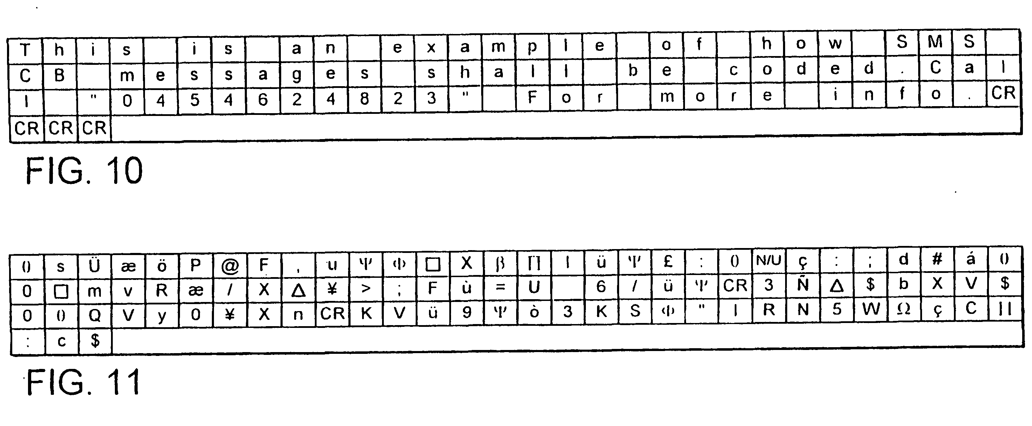

Figure 10 illustrates an example of an original cell broadcast message, consisting of one page containing 89 message text characters and 4 carriage return (text padding) characters. This message is encrypted as described in relation to Figure 4, and after receipt and storage by the mobile station may be displayed in accordance with the procedure shown in Figure 9.

If the SIM 34 has been provisioned with the corresponding decryption key, the message may be displayed in its original form as illustrated in Figure 10.

If however the SIM 34 has not been provisioned with the appropriate decryption key, the message will appear as illustrated in Figure 11, as a pseudorandom character set.

Because the number of bits of the encryption key is not equal to, nor a multiple of, the number of bits used per character in coding the text, there is no direct correspondence between any one of the original characters and the characters displayed in the encrypted text. In this case, the coding scheme used for the text characters utilises 7 bits per character, and the encryption keys contain 16 bits. Of course, other combinations of text character coding length and encryption key length may be used to similar effect.

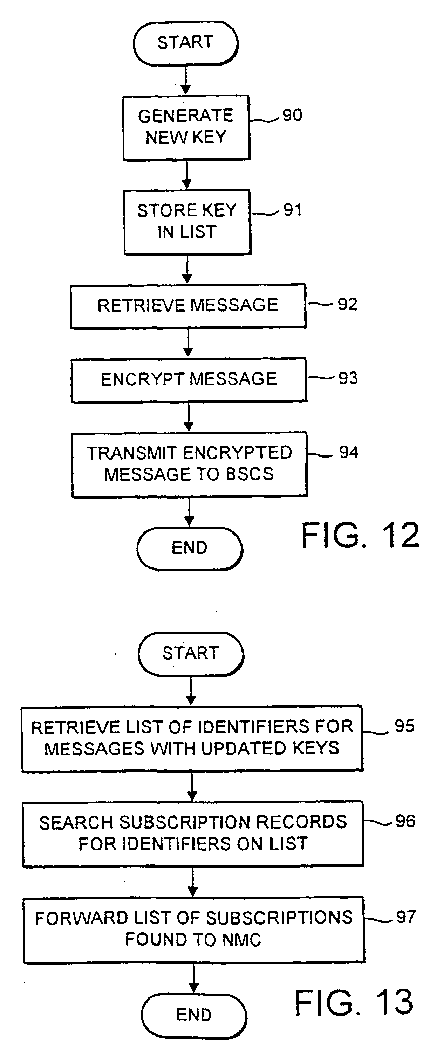

To ensure the long-term security of the encryption method used for limited access messages, the encryption keys used to encrypt the message texts will periodically be altered. Figure 12 illustrate a procedure carried out by the CBC 12 to update a particular encryption key. The CBC 12 first randomly generates a new 16 bit encryption key, step 90, and overwrites the previously-stored encryption key in the list illustrated in Figure 3 for the message identifier in question, step 91. Next, the CBC 12 proceeds to retrieve the message previously stored for the message identifier in question, step 92, and proceeds to encrypt the message with the newly generated encryption key, step 93. This encryption process is identical to that carried out when the message was originally received by the CBC 12 as described in relation to Figure 4, of course using a different encryption key. Once the message is encrypted, the new cell broadcast message is forwarded to the appropriate BSCs 4, step 94, for broadcast by the BTSs 6 on their CBCHs to mobile stations 8 receiving the cell broadcast channel in the cells served by the BSCs 4 in question.

Once a new encryption key has been generated in the CBC 12, and the corresponding cell broadcast message has been encrypted with the newly-generated key, the mobile stations 8 of users having access rights to the same message type must be provisioned with the new decryption key.

The first step of provisioning the SIMS 34 of mobile stations 8 of the appropriate subscribers with new decryption keys generated in the CBC 12 is the procedure carried out in Figure 13. First, the CSS 15 receives from the CBC 12 a list of message identifiers for the messages for which the decryption keys have been updated, step 95. The CSS 15 then proceeds to search its store of subscription records for the message identifiers on the updated decryption keys list, in order to determine which subscriptions require updated decryption keys, step 96. The CSS 12 then constructs a list of such subscriptions, which are forwarded to the NMC 14 to allow the NMC 14 to perform the appropriate provisioning procedures, step 97. The NMC 14 then proceeds to perform the procedure described in relation to Figure 7 for each subscription appearing on the list received from the CSS 15. This results in the mobile stations of each such subscription receiving a new RSU message containing updated decryption keys, in encrypted form, for message types to which the subscriber has access. These decryption keys are suitable for use in decrypting messages encrypted with the newly-generated encryption keys.

The encryption/decryption mechanism utilised in the above-described embodiment utilises the two-way encryption/decryption character of the XOR function, and is sufficiently secure for use in relation to many types of information. However, it will be appreciated that other two-way encryption/decryption mechanisms, for example using symmetric or public/private encryption/decryption keys, may be utilised to provide more (or less) secure encryption/decryption mechanisms.

In the above-described embodiment, the general-access messages are not subject to the XOR function used in the encryption/decryption process. However, it would also be possible to subject the message to the XOR function using a "free" key of the form of 16 bits of "0", which results in a message coding which is identical to the original message coding. This XORing with the "free" key may be performed in the CBC 12 when "encrypting" a general access message, and/or by the mobile station 8 when "decrypting" a general access message. In effect, no encryption or decryption would take place.

In addition to decrypting the encrypted message and commanding the mobile station 8 to display the plain text message, the SIM application programme may also perform other processes in response to data received in the cell broadcast message, such as updating the contents of the CBMID data field to select new message types, on behalf of the subscriber, which the mobile station 8 should accept and handle.

As will be appreciated, in this embodiment, if a subscriber is not authorised to receive a limited access message in plain text form, the SIM may either not contain an appropriate decryption key for the message or may be at least temporarily configured by the network operator so as not to conduct the procedure described above. Instead of the procedure described above, the SIM may act in one of a variety of alternative manners. For example, the SIM may command the mobile station 8 either to present the message to the user in encrypted form or to display an access-denied message, or may simply not any display on the mobile station, in response to a cell broadcast message containing an encrypted message which is of a type nevertheless selected by the subscriber.

The functionality for the provision and processing of encrypted cell broadcast messages may thus be contained entirely within the mobile communications network and on the SIM 34, and standard (e.g. GSM Phase 2+) handsets may be used without modification.

It will be appreciated that various modifications and variations may be employed in relation to the above-described embodiments.

The provisioning of the mobile stations with decryption keys via the air interface, using the RSU-type short messages, has the advantage that no action is required on the subscriber's behalf in order to provision the SIM 34 of the mobile station 8 with the decryption keys. However, the decryption keys, preferably encrypted using the subscriber's IMSI, or such like, as described, may be transmitted to the user by other methods, for example by mail. An alternative functionality of the mobile station 8 would allow the encrypted decryption keys to be manually input to the mobile station for storage in the cell broadcast decryption keys data field in the SIM 34.

Other information access prevention mechanisms to those described above could also be employed, such as the remote enablement/disablement (for example using RSU messages) of a decryption function on the mobile station, or of the cell broadcast receiving function on the mobile station.

In the above-described embodiments, the SIM 34 is in the form of a module electrically connected to the mobile station 8. However, the SIM may be embodied in an entirely separate module, such as a contactless smartcard transmitting data to and from the mobile station via a radio link.

Finally, although the above-described embodiments relate to a method and apparatus utilised in the GSM-type network, the present invention may of course be realised in other types of cellular telecommunications networks, whether using TDMA, CDMA, or other types of radio interface protocols.

It is envisaged that further modifications and variations may be employed without departing from the scope of the present invention.

## Claims

1. A method of distributing information to users in a cellular telecommunications network comprising a plurality of base stations transceiving in a plurality of cells of said network, said method comprising:
providing a plurality of mobile stations (8), wherein said mobile stations are each provided with a removable module (34) which may be used in association with any of a plurality of said mobile stations, each of said mobile stations having an associated information access status for the receipt of messages broadcast on a common channel of at least one cell of said network;
enabling first mobile stations having a first information access status to decrypt and present broadcast messages to a user in unencrypted form when being served by said cell, by providing each of said first mobile stations with a decryption function arranged to use a decryption key;
preventing second mobile stations having a second information access status from presenting said broadcast messages in unencrypted form to a user when being served in said cell;
broadcasting (52) a signal on a common channel of at least one cell of said network, said signal containing a broadcast message in encrypted form, for general reception in said at least one cell and for limited access by users of said first mobile stations; and
each said first mobile stations receiving said encrypted broadcast message, decrypting the message using said decryption key and presenting the message in unencrypted form to its respective user,
**characterised by**:
providing each said removable module of each of said first mobile stations with said decryption function arranged to use said decryption key;
transmitting a transfer protocol identifier (70) indicating that the encrypted broadcast message is of a type for data download to the removable module from the first mobile station;
arranging for each said first mobile station to pass said encrypted broadcast message to its corresponding removable module in response to receipt of said transfer protocol identifier; and
arranging for each said removable module of each of said first mobile stations to decrypt (86) said encrypted broadcast message using said decryption key.

2. A method according to claim 1, wherein said signal comprises a message identifier (110) accompanying a message and said method comprises enabling both said first and second mobile stations to read said message identifier.

3. A method according to claim 1 or 2, wherein said decryption key is (74) stored in said removable module in encrypted form.

4. A method according to claim 3, wherein said decryption key is decrypted (86) by said first mobile station using a data string specific to said removable module.

5. A method according to claim 4, wherein said data string is a subscriber identifier (IMSI) used in said cellular telecommunications network.

6. A method according to any preceding claim, further comprising transmitting (68) said decryption key (74) to said first mobile stations via a radio interface in said cellular telecommunications network.

7. A method according to any preceding claim, wherein said removable module is a subscriber identity module.

8. A method according to any one of the preceding claims, including transmitting data, to said first mobile stations, identifying message types accessible by said first mobile stations.

9. A method according to any preceding claim, wherein said removable module stores an application programme for performing the decryption (84, 86) and for controlling (88) a display (30) of said message on the mobile station.

10. A method according to any preceding claim, wherein said signal comprises a plurality of limited access messages each having a corresponding decryption key,
said method comprising providing (68) said first mobile stations with said decryption keys (74), storing said decryption keys on said removable modules of said first mobile stations, and enabling only ones of said first mobile stations having a decryption key corresponding to a limited access message to present said limited access message to a user in unencrypted form when being served in said cell.

11. A method according to claim 11, comprising providing (60, 62, 64, 66, 68) each of said first mobile stations with a selection of said decryption keys in accordance with a subscription held for each first mobile station respectively.

12. A method according to any preceding claim, wherein alternative limited access messages are broadcast in cells located in different areas of said cellular telecommunications network.

13. A method according to any preceding claim, wherein said common channel is a cell broadcast channel of a GSM-type communications system.

14. A mobile station (8) for receiving information in a cellular telecommunications system (PLMN), said mobile station comprising:
means (16, 18) for receiving an encrypted message broadcast on a common channel of a cell of said cellular telecommunications system;
means (30) for displaying said message, when decrypted, to a user; and
a removable module (34) comprising a memory (38b) for storing a decryption key (74),
**characterised in that**:
the mobile station comprises means responsive to receipt of a transfer protocol identifier (70) indicating that the broadcast message is of a type for data download to a removable module from the mobile station, so as to pass said encrypted broadcast message to the removable module; and
the removable module comprises means arranged to receive and decrypt said encrypted broadcast message using said decryption key.

15. A mobile station according to claim 14, wherein said removable module is a subscriber identity module.

16. A mobile station according to claim 14 or claim 15, wherein said removable module is arranged to store an application programme for performing the decryption and for controlling the display of said message on the mobile station.

17. A mobile station according to any one of claim 14 to claim 16, **characterised in that** said station is a GSM phase 2+ mobile station.

18. A mobile station according to any one of claim 14 to claim 17, **characterised in that** said station is a cellular mobile telephone.

## Patentansprüche

1. Verfahren zum Verteilen von Informationen an Benutzer in einem zellularen Telekommunikationsnetz, das mehrere Basisstationen umfasst, die in mehreren Zellen des Netzes senden und empfangen, wobei das Verfahren Folgendes umfasst:
Bereitstellen mehrerer Mobilstationen (8), wobei jede der Mobilstationen mit einem abnehmbaren Modul (34) versehen ist, welches in Verbindung mit einer der mehreren Mobilstationen verwendet werden kann, wobei jede der Mobilstationen einen verbundenen Informationszugriffsstatus für den Empfang von Nachrichten hat, die auf einem gemeinsamen Kanal von mindestens einer Zelle des Netzes gesendet werden;
Befähigen von ersten Mobilstationen, die einen ersten Informationszugriffsstatus haben, gesendete Nachrichten zu entschlüsseln und diese für einen Benutzer in unverschlüsselter Form darzustellen, wenn sie durch die Zelle bereitgestellt werden, indem jede der ersten Mobilstationen mit einer Entschlüsselungsfunktion versehen wird, die ausgebildet ist, um einen Entschlüsselungsschlüssel zu verwenden;
Verhindern, dass zweite Mobilstationen, die einen zweiten Informationszugriffsstatus haben, die gesendeten Nachrichten in unverschlüsselter Form für einen Benutzer darstellen, wenn sie in der Zelle bereitgestellt werden;
Senden (52) eines Signals auf einem gemeinsamen Kanal von mindestens einer Zelle des Netzes, wobei das Signal eine gesendete Nachricht in verschlüsselter Form zum allgemeinen Empfang in der mindestens einen Zelle und für beschränkten Zugriff durch Benutzer der ersten Mobilstationen umfasst; und
wobei jede der ersten Mobilstationen, die die verschlüsselte gesendete Nachricht empfangen, die Nachricht unter Verwendung des Entschlüsselungsschlüssels entschlüsseln und die Nachricht in unverschlüsselter Form ihrem entsprechenden Benutzer darstellen,
**gekennzeichnet durch**:
Versehen jedes der abnehmbaren Module von jeder der ersten Mobilstationen mit der Entschlüsselungsfunktion, die ausgebildet ist, um den Entschlüsselungsschlüssel zu verwenden;
Senden einer Transferprotokollkennung (70), die anzeigt, dass die verschlüsselte gesendete Nachricht von einem Typ zum Herunterladen von Daten von der ersten Mobilstation auf das abnehmbare Modul ist;
Veranlassen, dass jede der ersten Mobilstationen als Reaktion auf den Empfang der Transferprotokollkennung die verschlüsselte gesendete Nachricht an ihr entsprechendes abnehmbares Modul weitergibt; und
Veranlassen, dass jedes der abnehmbaren Module von jeder von den ersten Mobilstationen die verschlüsselte gesendete Nachricht unter Verwendung des Entschlüsselungsschlüssels entschlüsselt (86).

2. Verfahren nach Anspruch 1, wobei das Signal eine Nachrichtenkennung (110) umfasst, die eine Nachricht begleitet und wobei das Verfahren das Befähigen sowohl der ersten als auch der zweiten Mobilstationen zum Lesen der Nachrichtenkennung umfasst.

3. Verfahren nach Anspruch 1 oder 2, wobei der Entschlüsselungsschlüssel (74) in dem abnehmbaren Modul in verschlüsselter Form gespeichert ist.

4. Verfahren nach Anspruch 3, wobei der Entschlüsselungsschlüssel durch die erste Mobilstation unter Verwendung einer Zeichenfolge, die für das abnehmbare Modul spezifisch ist, entschlüsselt (86) wird.

5. Verfahren nach Anspruch 4, wobei die Zeichenfolge eine Teilnehmerkennung (IMSI) ist, die in dem zellularen Telekommunikationsnetz verwendet wird.

6. Verfahren nach einem der vorhergehenden Ansprüche, welches des Weiteren das Senden (68) des Entschlüsselungsschlüssels (74) an die ersten Mobilstationen über eine Funkschnittstelle in dem zellularen Telekommunikationsnetz umfasst.

7. Verfahren nach einem der vorhergehenden Ansprüche, wobei das abnehmbare Modul ein Subscriber Identity Modul ist.

8. Verfahren nach einem der vorhergehenden Ansprüche, welches das Senden von Daten an die ersten Mobilstationen, die Nachrichtentypen identifizieren, auf die durch die ersten Mobilstationen zugegriffen werden kann, umfasst.

9. Verfahren nach einem der vorhergehenden Ansprüche, wobei das abnehmbare Modul ein Anwendungsprogramm zum Ausführen der Entschlüsselung (84, 86) und zum Steuern (88) einer Anzeige (30) der Nachricht auf der Mobilstation umfasst.

10. Verfahren nach einem der vorhergehenden Ansprüche, wobei das Signal mehrere Nachrichten mit beschränktem Zugriff umfasst, von denen jede einen entsprechenden Entschlüsselungsschlüssel hat,
wobei das Verfahren das Versehen (68) der ersten Mobilstationen mit den Entschlüsselungsschlüsseln (74), das Speichern der Entschlüsselungsschlüssel auf den abnehmbaren Modulen der ersten Mobilstationen, und das Befähigen nur derjenigen von den ersten Mobilstationen, die einen Entschlüsselungsschlüssel haben, der einer Nachricht mit beschränktem Zugriff entspricht, zum Darstellen der Nachricht mit beschränktem Zugriff in unverschlüsselter Form für einen Benutzer, wenn sie in der Zelle bereitgestellt wird, umfasst.

11. Verfahren nach Anspruch 11, welches das Versehen (60, 62, 64, 66, 68) von jeder der ersten Mobilstationen mit einer Auswahl von den Entschlüsselungsschlüsseln in Übereinstimmung mit einer Subskription, die jeweils für jede der ersten Mobilstationen gehalten wird, umfasst.

12. Verfahren nach einem der vorhergehenden Ansprüche, wobei alternative Nachrichten mit beschränktem Zugriff in Zellen gesendet werden, die in unterschiedlichen Bereichen des zellularen Telekommunikationsnetzes angeordnet sind.

13. Verfahren nach einem der vorhergehenden Ansprüche, wobei der gemeinsame Kanal ein Cell Broadcast Channel eines Kommunikationssystems des GSM-Typs ist.

14. Mobilstation (8) zum Empfangen von Informationen in einem zellularen Telekommunikationssystem (PLMN), wobei die Mobilstation Folgendes umfasst:
Mittel (16, 18) zum Empfangen einer verschlüsselten, auf einem gemeinsamen Kanal einer Zelle des zellularen Telekommunikationssystems gesendeten Nachricht;
Mittel (30) zum Anzeigen der Nachricht, wenn sie entschlüsselt ist, für einen Benutzer; und
ein abnehmbares Modul (34) das einen Speicher (38b) zum Speichern eines Entschlüsselungsschlüssels umfasst,
**dadurch gekennzeichnet, dass**:
die Mobilstation auf den Empfang einer Transferprotokollkennung (70) reagierende Mittel umfasst, die anzeigen, dass die gesendete Nachricht von einem Typ für das Herunterladen von Daten von der Mobilstation auf ein abnehmbares Modul ist, derart, dass die verschlüsselte gesendete Nachricht an das abnehmbare Modul weitergegeben wird; und
das abnehmbare Modul Mittel umfasst, die ausgebildet sind, um die verschlüsselte gesendete Nachricht unter Verwendung des Entschlüsselungsschlüssels zu empfangen und zu entschlüsseln.

15. Mobilstation nach Anspruch 14, wobei das abnehmbare Modul ein Subscriber Identity Modul ist.

16. Mobilstation nach Anspruch 14 oder Anspruch 15, wobei das abnehmbare Modul angeordnet ist, um ein Anwendungsprogramm zum Ausführen der Entschlüsselung und zum Steuern der Anzeige der Nachricht auf der Mobilstation zu speichern.

17. Mobilstation nach einem der Ansprüche 14 bis 16, **dadurch gekennzeichnet, dass** die Station eine GSM Phase 2+ Mobilstation ist.

18. Mobilstation nach einem von Anspruch 14 bis Anspruch 17, **dadurch gekennzeichnet, dass** die Station ein zellulares Mobiltelefon ist.

## Revendications

1. Procédé de distribution d'informations à des utilisateurs dans un réseau de télécommunications cellulaire comprenant une pluralité de stations de base émettant et recevant dans une pluralité de cellules dudit réseau, ledit procédé comprenant les étapes consistant à :
se procurer une pluralité de stations mobiles (8), où lesdites stations mobiles sont chacune munies d'un module amovible (34) pouvant être utilisé en association avec une station quelconque d'une pluralité desdites stations mobiles, chacune desdites stations mobiles ayant un état associé d'accès aux informations pour la réception de messages diffusés sur un canal commun d'au moins une cellule dudit réseau,
permettre à des premières stations mobiles, ayant un premier état d'accès aux informations, de décrypter et de présenter des messages diffusés à un utilisateur sous forme non cryptée lorsqu'elles sont desservies par ladite cellule, en procurant à chacune desdites premières stations mobiles une fonction de décryptage agencée pour utiliser une clé de décryptage,
empêcher des secondes stations mobiles, ayant un second état d'accès aux informations, de présenter lesdits messages diffusés sous une forme non cryptée à un utilisateur lorsqu'elles sont desservies dans ladite cellule,
diffuser (52) un signal sur un canal commun d'au moins une cellule dudit réseau, ledit signal contenant un message diffusé sous forme cryptée, en vue d'une réception générale dans ladite au moins une cellule et en vue d'un accès limité par des utilisateurs desdites premières stations mobiles, et
chaque dite première station mobile recevant ledit message de diffusion crypté, décryptant le message en utilisant ladite clé de décryptage et présentant le message sous une forme non cryptée à son utilisateur respectif,
**caractérisé par** les étapes consistant à :
procurer, à chaque dit module amovible de chacune desdites premières stations mobiles, ladite fonction de décryptage agencée pour utiliser ladite clé de décryptage,
transmettre un identificateur de protocole de transfert (70) indiquant que le message diffusé crypté est d'un type destiné au téléchargement de données vers le module amovible depuis la première station mobile,
faire en sorte que chaque dite première station mobile transmette ledit message diffusé crypté à son module amovible correspondant en réponse à une réception dudit identificateur de protocole de transfert, et
faire en sorte que chaque dit module amovible de chacune desdites premières stations mobiles décrypte (86) ledit message diffusé crypté en utilisant ladite clé de décryptage.

2. Procédé selon la revendication 1, dans lequel ledit signal comprend un identificateur de message (110) accompagnant un message et ledit procédé comprend le fait de permettre à la fois auxdites premières et secondes stations mobiles de lire ledit identificateur de message.

3. Procédé selon la revendication 1 ou 2, dans lequel ladite clé de décryptage est (74) mémorisée dans ledit module amovible sous une forme cryptée.

4. Procédé selon la revendication 3, dans lequel ladite clé de décryptage est décryptée (86) par ladite première station mobile en utilisant une chaîne de données spécifique audit module amovible.

5. Procédé selon la revendication 4, dans lequel ladite chaîne de données est un identificateur d'abonné (IMSI) utilisé dans ledit réseau de télécommunications cellulaire.

6. Procédé selon l'une quelconque des revendications précédentes, comprenant en outre la transmission (68) de ladite clé de décryptage (74) auxdites premières stations mobiles par l'intermédiaire d'une interface radio dans ledit réseau de télécommunications cellulaire.

7. Procédé selon l'une quelconque des revendications précédentes, dans lequel ledit module amovible est un module d'identité d'abonné.

8. Procédé selon l'une quelconque des revendications précédentes, comprenant la transmission de données, auxdites premières stations mobiles, identifiant des types de messages accessibles par lesdites premières stations mobiles.

9. Procédé selon l'une quelconque des revendications précédentes, dans lequel ledit module amovible mémorise un programme d'application pour exécuter le décryptage (84, 86) et pour commander (88) un afficheur (30) dudit message sur la station mobile.

10. Procédé selon l'une quelconque des revendications précédentes, dans lequel ledit signal comprend une pluralité de messages à accès limité ayant chacun une clé de décryptage correspondante,
ledit procédé comprenant les étapes consistant à procurer (68), auxdites premières stations mobiles, lesdites clés de décryptage (74), mémoriser lesdites clés de décryptage sur lesdits modules amovibles desdites premières stations mobiles, et ne permettre qu'auxdites premières stations mobiles, ayant une clé de décryptage correspondant à un message à accès limité, de présenter ledit message à accès limité à un utilisateur sous forme non cryptée lorsqu'elles sont desservies dans ladite cellule.

11. Procédé selon la revendication 11, comprenant la fourniture (60, 62, 64, 66, 68) à chacune desdites premières stations mobiles, d'une sélection desdites clés de décryptage conformément à un abonnement conservé pour respectivement chaque première station mobile.

12. Procédé selon l'une quelconque des revendications précédentes, dans lequel des messages à accès limité différents sont diffusés dans des cellules situées dans des zones différentes dudit réseau de télécommunications cellulaire.

13. Procédé selon l'une quelconque des revendications précédentes, dans lequel ledit canal commun est un canal de diffusion de cellule d'un système de communications du type GSM.

14. Station mobile (8) destinée à recevoir des informations dans un système de télécommunications cellulaire (PLMN), ladite station mobile comprenant :
un moyen (16, 18) destiné à recevoir un message crypté diffusé sur un canal commun d'une cellule dudit système de télécommunications cellulaire,
un moyen (30) destiné à afficher ledit message, lorsqu'il est décrypté, à un utilisateur, et
un module amovible (34) comprenant une mémoire (38b) destinée à mémoriser une clé de décryptage (74),
**caractérisée en ce que** :
la station mobile comprend un moyen répondant à une réception d'un identificateur de protocole de transfert (70) indiquant que le message diffusé est d'un type destiné à un téléchargement de données vers un module amovible à partir de la station mobile, de façon à transmettre ledit message diffusé crypté au module amovible, et
le module amovible comprend un moyen agencé pour recevoir et décrypter ledit message diffusé crypté en utilisant ladite clé de décryptage.

15. Station mobile selon la revendication 14, dans laquelle ledit module amovible est un module d'identité d'abonné.

16. Station mobile selon la revendication 14 ou la revendication 15, dans laquelle ledit module amovible est agencé pour mémoriser un programme d'application pour exécuter le décryptage et pour commander l'affichage dudit message sur la station mobile.

17. Station mobile selon l'une quelconque des revendications 14 à 16, **caractérisée en ce que** ladite station est une station mobile du type GSM Phase 2+.

18. Station mobile selon l'une quelconque des revendications 14 à 17, **caractérisée en ce que** ladite station est un téléphone mobile cellulaire.
